# EUROPEAN PATENT SPECIFICATION

(11) **EP 0 326 325 B1**
(45) Date of publication and mention of the grant of the patent: **22.10.1997**
(21) Application number: 89300650.2
(22) Date of filing: 24.01.1989
(51) Int. Cl.: B24B 3/58, B23D 63/12

(54) **Apparatus for facilitating the machining of workpieces**
Vorrichtung zur Erleichterung der Verarbeitung von Werkstücken
Dispositif pour faciliter l'usinage de pièces

(30) Priority: 25.01.1988 CH 244/88
(43) Date of publication of application: 02.08.1989
(73) Proprietor: ISELI & CO. AG, CH-6247 Schotz (CH)
(72) Inventor: Iseli, Benno, CH-6247 Schotz (CH)
(74) Representative: Russell-Rayner, Albert Patrick

(56) References cited:
- CH-A- 277 079
- DE-A- 2 032 413
- DE-U- 7 331 658
- FR-A- 1 252 067
- US-A- 2 171 604

## Description

### BACKGROUND OF THE INVENTION

This invention relates to the apparatus for facilitating the machining i.e., grinding of predetermined regions of workpieces and particularly to the grinding of the side faces or flanks of saw blades in their tooth tip area.

### THE PRIOR ART

Machines are known which are intended to be able to machine i.e., grind both side faces of tooth tips of a saw blade (whether circular or straight) so that the requisite grinding of the side faces of each tip is effected in a single operation. After the grinding operation the tip is broadest at its leading i.e., cutting edge, and diminishes in width from the leading edge towards the rear face of the tip, and also frequently such that the tip tapers from the top face thereof towards the bottom face.

German Patent Specification No DE-A-2 032 413 describes a machine for machining the side flanks of the tips provided upon a saw blade. The machine comprises inter alia two pivoted arms (4) for carrying the grinding wheels (5), therebeing one such pivoted arm located on each side of the medial plane of a saw blade when mounted to the machine for the purposes of having the side flanks of its tips machined. The grinding wheels are mounted in such manner as to be able simultaneously to pivot about axes transverse to the medial plane of the blade, between a grinding position and a rest position. Arrangements are provided for enabling the operational positions of the grinding wheels to be adjusted . Arrangements are provided for supporting both of the pivoted arms relative to the remainder of the machine from one side of the medial plane.

The construction of the support and pivoting arrangements for this machine as may be noted from the German Specification includes a very large number of components namely, an assembly of some forty components coupled and interconnected in a number of ways resulting in need for approximately twelve adjustment settings in order correctly to position the grinding wheels relative to a tip to be ground.

As compared with this, the Applicants provide apparatus which is on a comparative basis extremely simple in construction involving some four adjustments and one relatively movable joint.

Anyone who has made use of apparatus such as has been shown in the cited Specification immediately appreciates that such complications results in equipment, having regard to the environment within which such equipment has to work, in which relatively moving parts are likely very rapidly to wear; become maladjusted; thereby leading to totally inaccurate grinding of the tips side faces.

It is important to appreciate that the working environment in any apparatus involving grinding wheels working in a relatively confined region and involved in the grinding of materials such as Tunsten carbides, Stellites and similar hard materials rapidly becomes covererd with a detrius of grinding, namely the hard tip forming material detrius and the grinding wheel dust as is worn away during grinding. In addition, one needs to bear in mind the sprays and splashes of the fluids used for the purposes of cooling the grinding region.

As may be seen from the above identified cited German specification (Reference B1) all of the adjustment means involved in this cited apparatus is located essentially immediately above the grinding zone and as such in the immediate vicinity of the grinding detrius and the cooling liquid splash and spray zone. In other words located in the worst possible region for such components.

In the case of the Applicant's apparatus it will be observed a single relatively movable joint is involved and all of the arrangements provided for displacement and setting of the grinding wheels are located remote from the actual grinding region of the Applicant's apparatus.

It has been found in practice that such constructions have many practical disadvantages particularly where the machine is required to be used for the machining of the tips of the teeth of band saws which may have a length in excess of six metres.

### OBJECTS OF THE INVENTION

It is an object of the invention to avoid the disadvantages of the known machines without forfeiting any of the useful features thereof.

A particular object is to provide a machine which enables the simultaneous machining both sides or flanks of the hard material tips provided upon the teeth of saw blades.

### STATEMENTS OF THE INVENTION

According to the present invention there is provided apparatus for machining a workpiece such as the flanks of the tips provided upon the teeth of a saw blade, the apparatus including a workpiece guide (13) defining a workpiece feed direction extending parallel to a predetermined reference plane (14); means for supporting with respect to the remainder of the apparatus two assemblies for mounting workpiece machining tools (27,37), there being one such assembly to each side of the reference plane (14) such that machining operations can be simultaneously effected upon a workpiece (5); means (6) for providing an operational connection between the two assemblies located at a location remote from the region occupied by a workpiece when cooperating with the guide (13), to enable simultaneous displacement of the two tools (27,37) between a non-machining or rest position and a machining position with respect to the workpiece; each of the assemblies comprising first pivotal means for enabling the setting of the relative angular positions of the tools (27,37) by rotation about first axes (25,35) each extending, offset from said reference plane (14), in a first direction parallel to said reference plane (14) and each of the assemblies comprising second pivotal means (21,23; 31,33) for enabling the relative angular positions of the tools (27,37) to be set by rotation about a second axis (22,33) extending in second direction transverse to the first direction and parallel to the said reference plane (14), characterised in that the respective second axis (22,32) of each second pivotal means is located, offset from the reference plane (14), on the same side of said reference plane (14) on which its respective said assembly and its respective first axis are located, and in that the first and second axes (22,32;25,35) of each assembly intersect each other.

Conveniently, each said assembly includes an arm pivotally mounted from a support means which is in turn mounted from the remainder of the apparatus, in that the axis of pivoting of each said arm is transverse to both said first and second axes, and in that pivotal movement of said arms serves to produce said displacement of the two tools between their a non-machining or rest position and the machining position.

Preferably, means are provided for cyclically raising and lowering a first one of said pivoted arms between its rest position and its working position, and in that said operation connection means produces sychronous displacement of the other pivoted arm.

In a particular construction the coupling means incorporates a tongue and groove arrangement in which the tongue and the groove of the arrangement are such as to allow relative angular displacement of the interengaging tongue and the groove whilst allowing virtually no play between the tongue and groove.

Conveniently, the tongue has a cross section with a part cylindrical portion connecting with a neck part narrower in width relative to the cylindrical portion of the tongue, and the groove has a width matching the diameter of the cylindrical portion of the tongue.

Preferably, each of the two sections of the transmission means or joint is rigidly connected to its respective pivoted arm by an offset producing element connected to it.

In a preferred construction of the apparatus of the invention the pivot axes of the pivoted arms or their notational extensions pass through the tongue or groove respectively, or through their notational radial extensions.

As a result of the offset arrangement of the pivotal action transmission means or joint more space is provided for the handling of saw-blades while the other dimensions of the apparatus remain the same, irrespective of whether a circular or straight blade is to be ground.

With the preferred embodiment of the transmission means or joint no additional problems arises from operational play in the drive joint, so that the precision of the device is not impaired by the offset.

With the apparatus of the invention a beneficial result is achieved that as the pivot axes of the pivoted arms pass through the tongue or the groove respectively, favourable conditions for the movement of the pivoted arms are enabled throughout their intended range of movement.

### BRIEF DESCRIPTION OF THE DRAWINGS

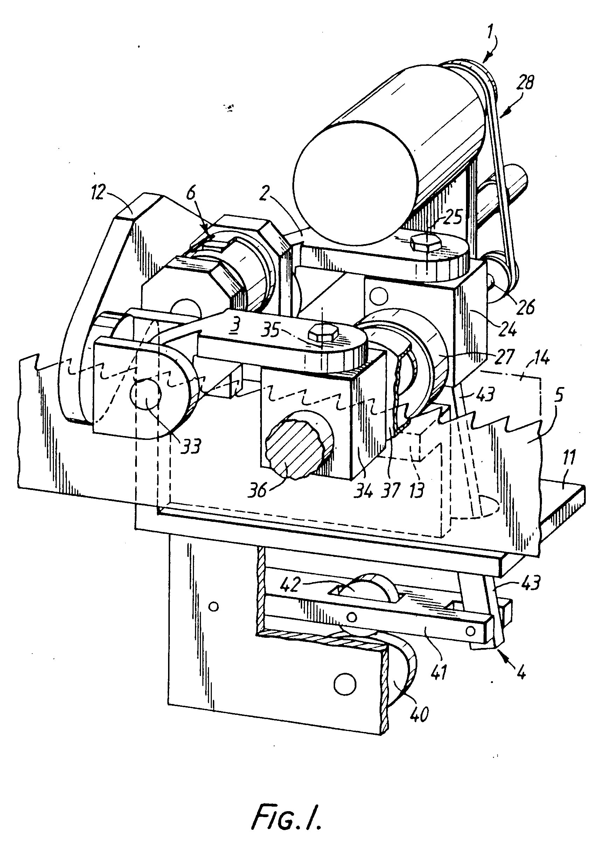

Further details of the invention will emerge from the following exemplary discussion of the purely schematic drawings of one embodiment of the invention in which:-
Figure 1 shows a partial view of apparatus according to the the invention, the Figure for the purposes of clarity omitting the drive to one of the two grinding wheels involved, and arrangements for indexing the blade through the grinding region:
Figure 2 shows a top view of part of the apparatus represented by Figure 1;
Figure 3 shows a section through line III-III in Figure 2, the lower part of which is cut-off as compared to Figure 1;
Figure 4 shows an enlarged top view of a detail of a coupling used in the apparatus of Figures 1 and 2;
Figure 5 shows a top view of the separated parts of the joint corresponding in principle to Figure 2;
Figure 6 shows an enlargement of the joint from Figure 3, roughly on the scale of Figures 4 and 5, and
Figure 7 is a fragmentary schematic illustration of the ground tips of a saw blade.

### DESCRIPTION OF THE PREFERRED EMBODIMENTS

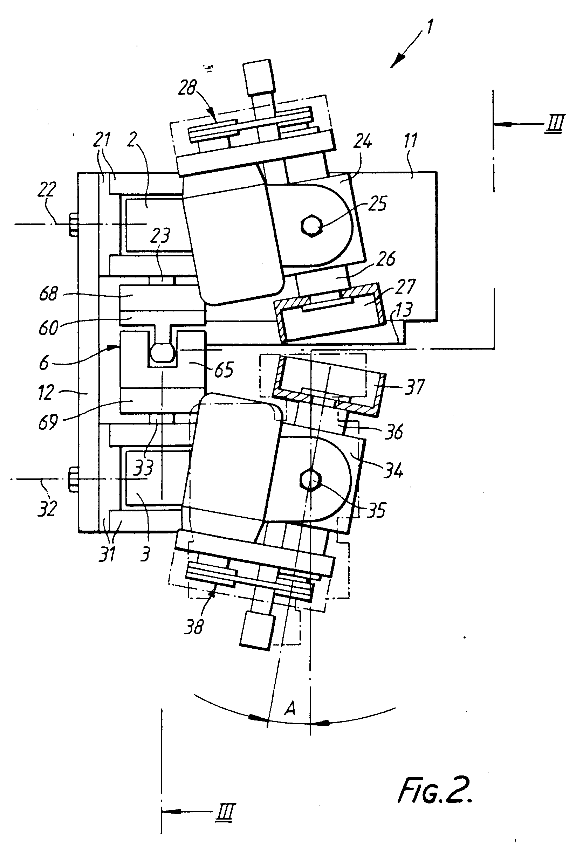

The following reference signs and numbers are used in the drawings.
- A: Angle of adjustment about 25 or 35 (Figure 2)
- B: Angle of adjustment about 22 or 32 (Figure 3)
- 1: The Apparatus of the invention as such
- 11: Machine frame of 1
- 12: Yoke of 11
- 13: Saw blade guide plate on 11
- 14: Saw blade plane
- 2: Primary pivoted arm
- 21: Bearing fork on 12, clampably pivotable about 22
- 22: Bearing fork axis of 21
- 23: Pivot axis for 2 in 22
- 24: Tool bearing block on 2, clampably pivotable about 25
- 25: Tool support shaft bearing axis
- 26: Tool support shaft, rotatable in 24
- 27: Grinding tool, fixed non-pivotally to 26
- 28: Individual drive for 27, with V-belt drive and motor
- 3: Secondary pivoted arm
- 31: Bearing fork on 12, clampably pivotable about 32
- 32: Bearing fork axis of 31
- 33: Pivot axis for 3 in 32
- 34: Tool bearing block on 2, clampably pivotable about 3
- 35: Tool support shaft bearing axis
- 36: Tool support shaft, rotatable in 34
- 37: Grinding tool, fixed non-pivotally to 36
- 38: Individual drive for 37, with V-belt drive and motor
- 4: Direct rocking drive for arm 2
- 40: Cam on oscillating arm 41
- 41: Oscillating arm, mounted pivotally in 11
- 42: Cam follower roller, running rotatably on cam 40
- 43: Push-rod, connected flexibly to 41 and 2
- 5: Saw blade
- 50: Saw teeth of 5
- 510: Back edge of 54
- 52: Gullet face of 50
- 520: Face edge of 54
- 53: Cutting edge at the tip of 50
- 54: Hard material in the tip area of 50
- 6: Pivotal action drive transmission means or joint
- 60: Tongue section of 6
- 61: Tongue on 60
- 62: Cylindrical portion or head of tongue 61
- 63: Neck of 61
- 64: Diameter of 62
- 65: Groove section of 6
- 66: Groove in 65
- 67: Slot-width of 66
- 68: Offset piece, connnects 60 to 23
- 69: Offset piece, connects 65 to 33

Referring now to the drawings the apparatus of the invention is mounted to the frame 11 of a machine provided with a guide plate 13 for guiding a workpiece i.e., portion of band saw 5, of which only a fragmentary portion is indicated, such that the guided length aligns with a saw blade plane 14 of the machine which serves to define the position for the blade 5 during grinding operations on the teeth tips.

A support i.e., yoke plate 12 is supported from the frame 11 above a blade 5 by support means located to one side of the plane 14 such that the yoke plate 12 bridges or overhangs the saw blade guide 13 and extends to either side of the saw plane 14.

Two bearing shaft carrying fork members 21,31 are mounted from the yoke plate at positions one to each side of the blade plane 14. The forks 21,31 are clampably pivotable with respect to the yoke plate 12 in such manner that their orientation about horizontal axes 22,32 can be selectively adjusted and such that once adjusted they can be clamped into the adjusted setting. A primary pivot arm 2 is pivotally mounted to the fork 21 by way of a shaft 23 rotatable in its fork 22 so that it is rotatable with respect to the fork and so that the arm 2 which is connected to the shaft correspondingly rotates the associated shaft 22. A secondary pivot arm is similarly pivoted with respect to the fork 31 by way of a shaft 33. It will be noted that the support for the forks is totally located to one side of the saw plane 14.

Since the bearing forks 21,31 are pivotable relative to a yoke 12, the shafts 23,33, and, therefore, the pivoted arm are correspndingly positionally adjustable. The extent of pivotal movement is represented by the angle B of Figure 3.

Tool i.e, grinding wheel support shafts 26, 36 are respectively carried by tool bearing blocks 24, 34 repectively pivotally mounted for for adjustment rotation about axes 25,35. The blocks 24,34 are connected to the free ends of the pivoted arms 2,3 so that the pivot axes are similarly spaced from the pivot axes of the arms 2,3. The connection between the bearing blocks and the pivot arms 2,3 is such the axial direction of the drive shafts 26,36 for the grinding wheels 27,37, are adjustable over an angular range of, for example, 'A' degrees (cf Figure 2) relative to the saw blade plane 14.

After a required adjustment the bearing blocks 23,24 can be clamped against displacement relative to the associated pivot arms 2,3.

Each grinding wheel 27,37 is individually drivable by an associated drive 28,38 (Figure 2) including a motor, drive pulleys and an associated transmission belt.

In order to perform the requisite machining i.e., grinding operation it is necessary to be able to rock i.e., tilt the pivoted arms up or down as required so that the grinding wheels 27,37 can be moved towards or away from the tips to be ground.

According to a feature of the invention this rocking movement is effected by providing means for imparting a direct drive to one of the pivoted arms namely the arm 2, and to transmit the rocking movement of the primary arm 2 to the secondary arm 3 by way of a pivotal movement transmission joint 6. Since the grinding operations are required to be effected upon successive tips the synchronous tilting of the arms has to be effected cyclically i.e., the grinding wheels have to be alternately moved simultaneously towards the tip to be ground and after grinding moved away from the ground tip to enable a succession of tips to be advanced to the grinding position.

This direct drive arrangement 4 is located to primary arm side of the saw blade plane 14 in such manner that it does not impede the positioning of a saw blade into operational cooperation with the guide plate.

The direct drive arrangement 4 includes a push rod 43 flexibly i.e., pivotally connecting at one end with the bearing block 24 and at the other end with an oscillating arm 41 pivotally connected to the frame 11. The arm 41 carries a roller 42 which serves as the follower for a cam 40 mounted in a bearing (not shown) in the machine frame 11 and driveable by a motor (not shown). The movement of oscillating arm 41 is transmitted directly to primary pivoted arm 2 by a push-rod 43.

As mentioned the primary pivoted arm 2 is connected with minimum play to the secondary pivoted arm by the pivotal movement transmission means or joint 6.

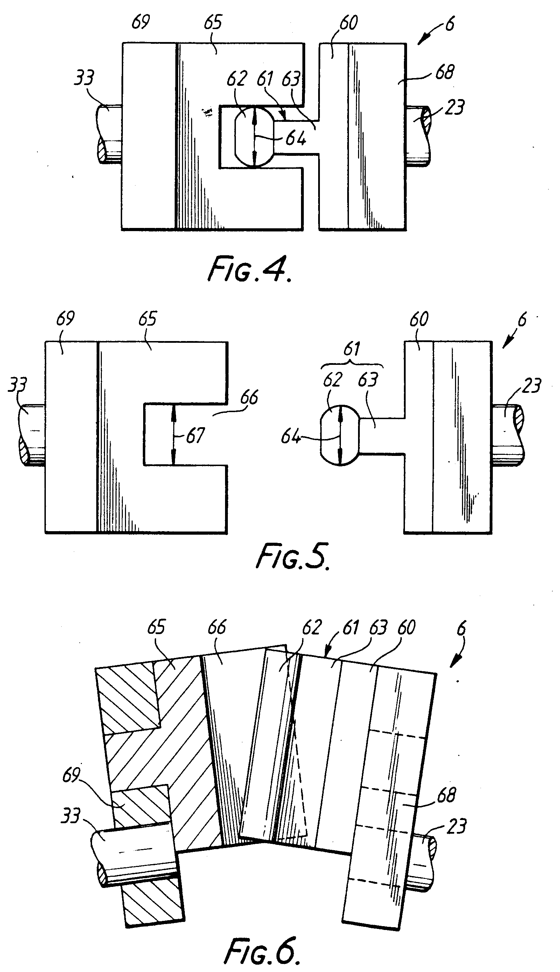

As may be particularly seen from Figures 4 to 6 the joint 6 essentially includes a tongue and groove connection which allows relative angular displacements between the tongue and groove connection. To this extent the connection is broadly speaking a universal coupling. In the particular arrangement shown the joint 6 thus includes a tongue providing section 60 and a groove providing section 65 which interengage to form a flexible relatively pivotable connection with each other. The tongue section 60 includes a tongue 61 consisting of a cylindrical tongue head 62 (it is partly flattened) on a neck 63 which engages in groove 66 of the groove section 65.

The diameter 64 of the cylindrical tongue head 62 corresponds with a high degree of precision to the width 67 of the groove 66, so that play between the tongue head and groove is reduced as much as possible compatible with clearance to effect operational relative movements. It will be apparent (from Figures 4 to 6 in particular) that, because of the rounded form of the tongue head 62, within certain limits the two joint sections 60, 65 can pivot and slide relative to each other without play arising in the drive.

Both drive parts 60,65 are mounted to the respective pivoted arm shafts 23,33 by offset producing attachment elements or pieces 68,69, in such a way that drive joint 6 is offest relative to the shafts 23,33 in the direction extending away from the saw-blade guide 13 in the direction of saw-blade plane 14. This configuration makes it possible for the machine to be able to accommodate, as compared with known machines, broader straight saw blades or circular saw-blades of larger diameter.

The feed i.e., indexing of the saw blades can be effected by known means.

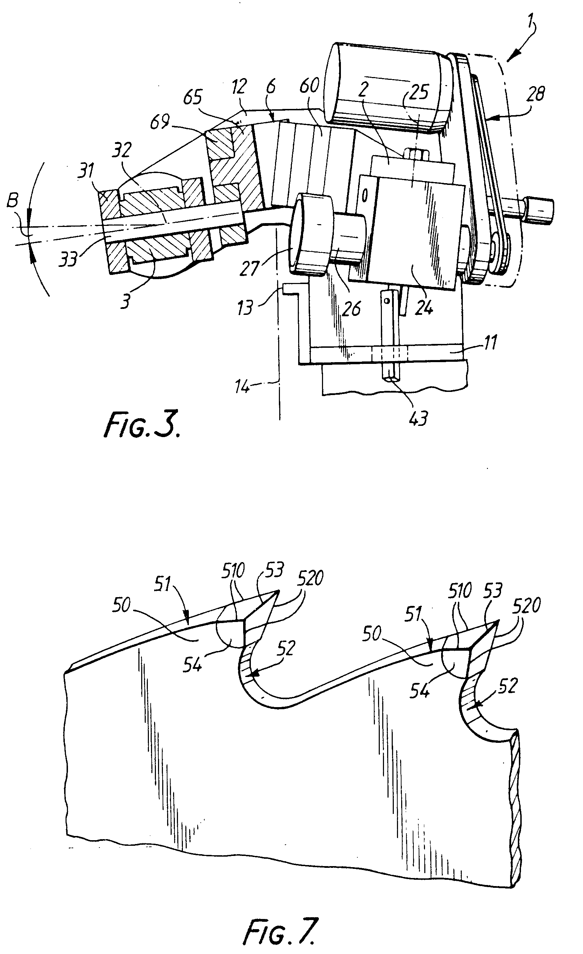

The saw blade illustrated in Figure 7 has on each tooth a back face 51 and a front face 52 and a cutting edge 53 of hard material 54. When grinding with the machine described, the cutting edge 53 can be exposed not only obliquely relative to back face 51 along back edges 510, but also along the oblique face edges 520, a process which can be effected by an appropriate setting within the angular adjustment ranges B and A.

It will be apparant from the description that the adjustments of the grinding wheel settings relative to the saw blade plane 14 allows teeth 50 to be ground more or less obliquely with regard to the tooth face edges 520 and thereby to grind cutting edge 53 more in this respect, and thereby to gain more or less access to cutting edge 53 in this respect.

The above described apparatus is utilisable in the following manner. A saw blade is mounted in the machine, the blade being supported by the plate 11 and other supports (not shown) so that the blade cooperates with the guide plate 12.

It will be assumed that both side faces of the blade tips are to be machined in an identical manner with the side faces of each tip tapering in the direction rearwards from the tip front face and also tapering in the downwards direction from the tip top face. To obtain this double tapering it is necessary to set the working faces i.e., grinding planes of the grinding wheels such they are operationally parallel to the required planes of the tip side faces.

To achieve this it is necessary to effect two main adjustments firstly the inclining of the grinding wheels so that they are inclined towards each other in the direction downwardly of the top to bottom of the tips to be ground, and secondly so that they are additionally inclined towards each other in the front to rear direction of the tips to be ground. The first adjustment is effected by pivoting the forks so that the shafts 23,33 of the pivoted arms 2,3 are inclined to the horizontal. The inclination corresponding to the required tapering of the tip side faces in the associated direction. The second adjustment is effected by rotating the shaft support blocks 24,34 with respect to the pivoted arms 2,3. As mentioned following these adjustments the forks and blocks are clamped in the adjusted positions.

As has been mentioned as it is required to rock the two pivot arms 2,3 together a displacement transmission joint 6 is provided for such displacement transmission. By providing the tongue and groove method of interconnection in the joint the joint is able to accommodate the relative angular displacement of the pivot arm shafts 23,33.

Furthermore, since the interengaging portions of the joint are located to one side of the axes of the shafts in the direction away from the location of the saw blade on the machine the working space available for the saw blade is not impeded by the provision of the displacement transmission joint, thereby greatly facilitating loading and unloading of a blade.

It will be appreciated that with the apparatus construction of the invention all of the support and drive arrangements for the grinding wheels are located to one side only of the saw blade above, and in addition the pivotal action transmission joint 6 is totally offset i.e., located outwardly of the pivot axes butt such that the axes of these shafts or the projections of such axes pass through the joint. With this positioning of the joint 6 the pivot arms carrying the grinding wheel assemblies do not encroach upon the working space for the saw blade etc., whereby this space is not impeded thereby enabling the grinding of deeper blades as compared with those possible by a similarly sized machine not incorporating the features of the invention. In addition, the provision of the offset positioning for the transmission joint 6 makes it is possible to accommodate greater angular separation variation for the grinding wheels when in their retracted positions than that possible with said similarly sized machines so that thicker blade tips can be machined as compared with the machining thickness possible similarly sized machines.

## Claims

1. Apparatus for machining a workpiece such as the flanks of the tips provided upon the teeth of a saw blade, the apparatus including a workpiece guide (13) defining a workpiece feed direction extending parallel to a predetermined reference plane (14); means for supporting with respect to the remainder of the apparatus two assemblies for mounting workpiece machining tools (27,37), there being one such assembly to each side of the reference plane (14) such that machining operations can be simultaneously effected upon a workpiece (5); means (6) for providing an operational connection between the two assemblies located at a location remote from the region occupied by a workpiece when cooperating with the guide (13), to enable simultaneous displacement of the two tools (27,37) between a non-machining or rest position and a machining position with respect to the workpiece; each of the assemblies comprising first pivotal means for enabling the setting of the relative angular positions of the tools (27,37) by rotation about first axes (25,35) each extending, offset from said reference plane (14), in a first direction parallel to said reference plane (14), and each of the assemblies comprising second pivotal means (21,23; 31,33) for enabling the relative angular positions of the tools (27,37) to be set by rotation about a second axis (22,33) extending in second direction transverse to the first direction and parallel to the said reference plane (14), characterised in that the respective second axis (22,32) of each second pivotal means is located, offset from the reference plane (14), on the same side of said reference plane (14) on which its respective said assembly and its respective first axis are located, and in that the first and second axes (22,32;25,35) of each assembly intersect each other.

2. Apparatus as claimed in claim 1, and characterised in that each said assembly includes an arm (2,3) pivotally mounted from a support means (12) which is in turn mounted from the remainder of the apparatus, in that the axis (23,33) of pivoting of each said arm is transverse to both said first and second axes, (22,32;25,35) and in that pivotal movement of said arms (2,3) serves to produce said displacement of the two tools (27,37) between the non-machining or rest position and the machining position.

3. Apparatus as claimed in claim 2, and characterised in that means are provided for cyclically raising and lowering a first one (2) of said pivoted arms (2,3) between its rest position and its working position, and in that said operation connection means (6) produces synchronous displacement of the other pivoted arm (3).

4. Apparatus as claimed in 2 or 3, and characterised in that the operational connection means (6) is positionally offset relative to the pivot axes (23,33) of the pivotal arms (2,3) in a direction away from the workpiece guide (13).

5. Apparatus as claimed in claim 2 or 3, and characterised in that the operational connection (6) comprises two non-identical parts (60,68; 62,69).

6. Apparatus as claimed in claim 5, and characterised in that the operational connection comprises a tongue and groove arrangement (60,65).

7. Apparatus as claimed in claim 6, and characterised in that the tongue (61) and the groove (66) of the arrangement (60,65) is such as to allow relative angular displacement of the interengaging tongue (61) and groove (66) whilst allowing virtually no play between the tongue and groove.

8. Apparatus as claimed in claim 6 or 7, and characterised in that the tongue (61) has in cross-section a part cylindrical portion (62) connecting with a neck part (63) narrower in width relative to the cylindrical portion (62) of the tongue, and in that the groove (66) has a width (67) matching the diameter (64) of the cylindrical portion (62) of the tongue (61)

9. Apparatus as claimed in claim 6,7 or 8, and characterised in that each of the two parts of the operation connection (6) is rigidly connected to its respective pivoted arm (2,3) by an offset producing element (68,69).

10. Apparatus as claimed in claim 6, 7, 8 or 9 and characterised in that the pivot axes of the pivoted arms (2,3) or their rotational extensions pass through the tongue (61) or groove (66) respectively, or through their notational radial extensions.

## Patentansprüche

1. Vorrichtung zum Bearbeiten eines Werkstückes mit Flanken an den Spitzen auf den Zähnen eines Sägeblattes umfassend: Eine Werkstückhalterführung (13), welche einen Werkstückvorschub parallel zu einer vorbestimmten Referenzebene (14) definiert;
Mittel zur Auflage von zwei Elementen zum Befestigen von Werkzeugen (27,37) in Beziehung zur übrigen Vorrichtung, wobei sich je eines der Elemente auf jeder Seite der Referenzebene (14) befindet, so dass die Bearbeitungsoperationen gleichzeitig an einem Werkstück (5) durchführbar sind;
Mittel (6) zum Erstellen einer Wirkverbindung zwischen den zwei sich im von einem Werkstück mit der Führung (13) befindenden Elementen, um zu ermöglichen, dass die beiden Werkzeuge (27,37) gleichzeitig verschiebbar sind zwischen einer Nicht-bearbeitungs- oder Ruhestellung und einer Stellung zum Bearbeiten des Werkstückes;
und wobei jedes Element erste Schwenkmittel aufweist, um die relativen Winkelstellungen der Werkzeuge einstellbar zu machen, indem sie um erste Achsen (25,35) gedreht werden, welche sich neben der Referenzebene (14) in einer ersten Richtung parallel zu dieser erstrecken und wobei jedes der Elemente zweite Schwenkmittel (21,23, 31,32) aufweist, um die relativen Winkelstellungen der Werkzeuge einstellbar zu machen, indem sie um zweite Achsen (22,32) gedreht werden, welche sich in einer zweiten Richtung rechtwinklig zur ersten Richtung erstrecken und parallel zur Referenzebene (14) sind,
gekennzeichnet dadurch, dass
die zweiten Achsen (22,33) die zweiten Schwenkmittels seitlich der Referenzebene (14) angeordnet sind, und zwar jeweils auf der gleichen Seite der Referenzebene (14), auf welcher sich sein zugehörendes Element und seine zugehörende erste Achse befindet, und wobei sich die ersten und die zweiten Achsen schneiden.

2. Vorrichtung nach Anspruch 1, dadurch gekennzeichnet, dass jedes der Elemente einen Arm (2,3) aufweist, welcher schwenkbar montiert ist an einem Trägerteil (12), welcher selbst wiederum an der übrigen Vorrichtung befestigt so ist, dass die Achsen (23,33) zum Schwenken jedes Armes im rechten Winkel zu den beiden ersten und zweiten Achsen (25,35, 22,32,) ist, und dass die Schwenkbewegung der besagten Arme (2,3) dazu dienen, eine Verschiebung zu ermöglichen zwischen der Nicht-bearbeitungs- oder Ruhestellung und der Arbeitsstellung.

3. Vorrichtung nach Anspruch 2, dadurch gekennzeichnet, dass Mittel vorgesehen sind für ein zyklischen Anheben und Absenken eines ersten (2) der genannten Schwenkarme (2,3) zwischen seiner Ruhestellung und seiner Arbeitsstellung und dass die Mittel zur Wirkverbindung (6) ein synchrones Verschieben des anderen Schwenkarmes (3) erzeugen.

4. Vorrichtung nach Anspruch 2 oder 3, dadurch gekennzeichnet, dass die Mittel zur Wirkverbindung (6) sich neben der Schwenkachse (23,33) der Schwenkarme (2,3) befinden in der Richtung weg von der Werkstückführung (13).

5. Vorrichtung nach Anspruch 2 oder 3, dadurch gekennzeichnet, dass die Wirkverbindung (6) zwei ungleiche Teile (60,68, 62,69) umfasst.

6. Vorrichtung nach Anspruch 5, dadurch gekennzeichnet, dass die Wirkverbindung Anordnung (60,65) einer Zunge und einer Nut umfasst.

7. Vorrichtung nach Anspruch 6, dadurch gekennzeichnet, dass die Zunge (61) und die Nut (66) der Anordnung (60,65) so ausgeführt sind, dass sie eine Verschiebung in einem Winkel im Eingriff der Zunge (61) in der Nut (66) ermöglichen, währenddem tatsächlich kein Spiel zwischen Zunge und Nut vorhanden ist.

8. Vorrichtung nach Anspruch 6 oder 7, dadurch gekennzeichnet, dass die Zunge (61) im Querschnitt einen zylindrischen Teil (62) aufweist, welcher mittels einem Nackenteil (63), der enger ist als der zylindrische Teil (62) der Zunge, und dass der Schlitz (66) eine Weite (67) hat, welcher dem Durchmesser (64) des zylindrischen Teils (62) der Zunge (6) entspricht.

9. Vorrichtung nach einem der Ansprüche 6,7 oder 8, dadurch gekennzeichnet, dass jeder der zwei Teile der Wirkverbindung (6) mit den zugehörenden Schwenkarmen (2,3) mittels einem Abstandselement (68,69) starr verbunden ist.

10. Vorrichtung nach einem der Ansprüche 6,7,8 oder 9, dadurch gekennzeichnet, dass die Schwenkachsen der Schwenkarme (2,3) oder ihre drehbaren Verlängerungen durch die Zunge (61) respektive durch die Nut (66) oder durch deren drehbaren radialen Verlängerungen führen.

## Revendications

1. Appareil permettant d'usiner une pièce telle que les flancs des pointes prévues sur les dents d'une lame de scie, l'appareil comprenant un guide de pièce (13) qui définit une direction d'amenée de pièce s'étendant parallèlement à un plan de référence prédéterminé (14) ; des moyens permettant de supporter, par rapport au reste de l'appareil, deux ensembles permettant de monter les outils (27, 37) d'usinage de la pièce, ces ensembles se trouvant de chaque côté du plan de référence (14), de telle sorte que les opérations d'usinage puissent être effectuées simultanément sur une pièce (5) ; des moyens (6) permettant de réaliser une liaison fonctionnelle entre les deux ensembles situés à distance de la région occupée par la pièce lorsqu'elle coopère avec le guide (13), pour permettre un déplacement simultané des deux outils (27, 37) entre une position de non-usinage ou de repos et une position d'usinage par rapport à la pièce ; chacun des ensembles comprenant des premiers moyens formant pivot pour permettre le réglage des positions angulaires relatives des outils (27, 37), par rotation autour des premiers axes (25, 35) qui s'étendent chacun, décalés par rapport audit plan de référence (14), dans une première direction parallèle audit plan de référence (14), et chacun des ensembles comprenant des deuxièmes moyens formant pivot (21, 23 ; 31, 33) pour permettre le réglage des positions angulaires relatives des outils (27, 37), par rotation atour d'un deuxième axe (22, 33) qui s'étend dans une deuxième direction, transversale à la première direction, et parallèle audit plan de référence (14), caractérisé en ce que le deuxième axe respectif (22, 32) de chacun des deuxièmes moyens formant pivot est disposé, décalé par rapport au plan de référence (14), du même côté dudit plan de référence (14) que son dit ensemble respectif et son dit premier axe, et en ce que le premier et le deuxième axes (22, 32 ; 25, 35) de chaque ensemble sont sécants.

2. Appareil selon la revendication 1, et caractérisé en ce que chacun desdits ensembles comprend un bras (2, 3) monté pivotant sur des moyens formant support (12), qui pour leur part sont fixés au reste de l'appareil, en ce que l'axe de pivotement (23, 33) de chacun desdits bras est transversal audit premier axe (22, 32) et audit deuxième axe (25, 35), et en ce que le mouvement de pivotement desdits bras (2, 3) sert à produire ledit déplacement des deux outils (27, 37) entre la position de non-usinage ou de repos et la position d'usinage.

3. Appareil selon la revendication 2, et caractérisé en ce que des moyens sont prévus pour élever et abaisser de manière cyclique un premier bras (2) desdits bras pivotants (2, 3), entre sa position de repos et sa position de travail, et en ce que lesdits moyens de liaison fonctionnelle (6) produisent un déplacement en synchronisation de l'autre bras pivotant (3).

4. Appareil selon la revendication 2 ou 3, et caractérisé en ce que les moyens de liaison fonctionnelle (6) ont une position décalée par rapport aux axes de pivotement (23, 33) des bras pivotants (2, 3), dans une direction qui s'éloigne du guide de pièce (13).

5. Appareil selon la revendication 2 ou 3, et caractérisé en ce que la liaison fonctionnelle (6) comprend deux parties non identiques (60, 68 ; 62, 69).

6. Appareil selon la revendication 5, et caractérisé en ce que la liaison fonctionnelle comprend un montage (60, 65) en coulisseau et gorge.

7. Appareil selon la revendication 6, et caractérisé en ce que le coulisseau (61) et la gorge (66) du montage (60, 65) sont tels qu'ils permettent un déplacement angulaire relatif du coulisseau (61) et de la gorge (66), en prise l'un et l'autre, tout en ne permettant en pratique aucun jeu entre le coulisseau et la gorge.

8. Appareil selon la revendication 6 ou 7, et caractérisé en ce que le coulisseau (61) a une portion (62), partiellement cylindrique en section transversale, que est reliée à une partie formant col (63), moins large que la portion cylindrique (62) du coulisseau, et en ce que la gorge (66) a une largeur (67) ajustée au diamètre (64) de la portion cylindrique (62) du coulisseau (61).

9. Appareil selon la revendication 6, 7 ou 8, et caractérisé en ce que chacune des deux parties de la liaison fonctionnelle (6) est assemblée en liaison rigide à son bras pivotant (2, 3) respectif, par l'intermédiaire d'un élément (68, 69) produisant un décalage.

10. Appareil selon la revendication 6, 7, 8 ou 9, et caractérisé en ce que les axes de pivotement des bras pivotants (2, 3) ou leurs extensions de rotation passent à travers le coulisseau (61) et la gorge (66), ou à travers leurs extensions de rotation radiales.
